# EUROPÄISCHE PATENTSCHRIFT

(11) **EP 1 177 237 B1**
(45) Veröffentlichungstag und Bekanntmachung des Hinweises auf die Patenterteilung: **18.08.2004**
(21) Anmeldenummer: 00922645.7
(22) Anmeldetag: 18.04.2000
(51) Int. Cl.: C08G 65/10, C08G 18/48, C07F 19/00, B01J 31/12

(54) **KRISTALLISIERENDE POLYETHERPOLYOLE, EIN VERFAHREN ZU DEREN HERSTELLUNG SOWIE DEREN VERWENDUNG**
CRYSTALLISING POLYETHER POLYOLS, A METHOD FOR PRODUCING THEM AND USE OF THE SAME
POLYETHERPOLYOLS CRISTALLISANTS, LEUR PROCEDE DE PRODUCTION ET LEUR UTILISATION

(30) Priorität: 28.04.1999 DE 19919267
(43) Veröffentlichungstag der Anmeldung: 06.02.2002
(73) Patentinhaber: Bayer MaterialScience AG, 51368 Leverkusen (DE)
(72) Erfinder: SCHÄFER, Walter, D-42799 Leichlingen (DE); HOFMANN, Jörg, D-47829 Krefeld (DE); GUPTA, Pramod, D-50181 Bedburg (DE); OOMS, Pieter, D-47800 Krefeld (DE)
(86) Internationale Anmeldenummer: PCT/EP2000/003495
(87) Internationale Veröffentlichungsnummer: WO 2000/066648

(56) Entgegenhaltungen:
- EP-A- 0 862 947
- DE-A- 1 720 337
- GB-A- 893 274
- US-A- 4 962 281

## Beschreibung

Die Erfindung betrifft kristallisierende Polyetherpolyole, ein Verfahren zu deren Herstellung sowie deren Verwendung zur Herstellung von Polyurethan-Werkstoffen, insbesondere Polyurethan-Schäumen, -Elastomeren und -Beschichtungen.

Kristallisierende Poly(oxypropylen)polyole sind bekannt und zeichnen sich in Polyurethan (PUR)-Anwendungen durch eine Verbesserung der mechanischen Produkteigenschaften aus. Von erheblichem Nachteil für den Einsatz in PUR-Rezepturen ist die hohe Viskosität der Polyole, auch in aufgeschmolzenem Zustand bei Temperaturen von 60 bis 100°C, die vielfach eine Umsetzung in Lösungsmitteln erforderlich macht. Auch die Herstellung und Reinigung der kristallisierenden Polyetherpolyole auf Basis von Propylenoxid ist durch deren hohe Viskosität beträchtlich erschwert. Die Ursache der hohen Viskosität dieser Produkte sind im wesentlichen Polymeranteile eines besonders hohen Molekulargewichts.

Es bestand daher die Aufgabe, kristallisierende Polyetherpolyole auf Basis von Propylenoxid mit verringerter Viskosität bereitzustellen, um die oben geschilderten Nachteile bei der Verarbeitung zu vermeiden.

Die erfindungsgemäße Aufgabe wurde durch die Bereitstellung neuer, kristallisierender Polyetherpolyole gelöst.

Gegenstand der Erfindung sind daher kristallisierende Polyetherpolyole herstellbar durch Umsetzung von zunächst Propylenoxid mit Polyhydroxyverbindungen in Gegenwart von einer Zink- und/oder Aluminiumatome enthaltenden Alkoxy-Verbindung zu einem kristallisierenden Polyetherpolyol eines mittleren Molekulargewichts Mₙ von 500 bis 5000 und anschließender weiterer Umsetzung des so erhaltenen kristallisierenden Polyetherpolyols mit 10 bis 90 Gew.-%, bezogen auf die Menge des kristallisierenden Polyols, eines Epoxids in Gegenwart eines Katalysators, der Propylenoxid nicht stereospezifisch polymerisiert, zu einem kristallisierenden Polyetherpolyol eines mittleren Molekulargewichts Mₙ von 1000 bis 20 000.

Ein weiterer Gegenstand der vorliegenden Erfindung ist ein Verfahren zur Herstellung von kristallisierenden Polyetherpolyolen, das dadurch gekennzeichnet ist, dass man zunächst Propylenoxid mit Polyhydroxyverbindungen in Gegenwart von einer Zink- und/oder Aluminiumatome enthaltenden Alkoxyverbindung zu einem kristallisierenden Polyetherpolyol eines mittleren Molekulargewichts Mₙ von 500 bis 5000 umsetzt und anschließend das so erhaltene kristallisierende Polyetherpolyol mit 10 bis 90 Gew.-%, bezogen auf die Menge des kristallisierenden Polyetherpolyols. eines Epoxids in Gegenwart eines Katalysators, der Propylenoxid nicht stereospezifisch polymerisiert, zu einem kristallisierenden Polyetherpolyol eines mittleren Molekulargewichts Mₙ von 1000 bis 20 000 weiter reagieren lässt.

Erfindungsgemäß kann die Umsetzung des als Zwischenprodukt erhaltenen kristallisierenden Polyetherpolyols mit dem Epoxid katalytisch in beliebiger Weise durchgeführt werden, beispielsweise durch saure, basische oder koordinative Katalyse. bevorzugt durch Alkalihydroxid oder Doppelmetallcyanid (DMC)-Katalyse.

In diesem Zusammenhang ist darauf hinzuweisen, dass das als Zwischenprodukt erhaltenc kristallisierende Polyetherpolyol ohne Abtrennung des bei dessen Herstellung eingesetzten Katalysators in der beschriebenen Weise mit dem Epoxid weiterverarbeitet werden kann.

Als Polyhydroxyverbindungen kommen erfindungsgemäß alle für die Umsetzung mit Epoxiden bekannten Polyhydroxyverbindungen in Betracht, insbesondere Polyhydroxyverbindungen mit 2 bis 6 Hydroxylgruppen pro Molekül und einem Molgewicht von 90 bis 2000. bevorzugt 200 bis 1500. Eingesetzt werden insbesondere Polypropylenglykole, Polyethylenglykole, Dihydroxypolyethylenoxid-polypropylenoxid-Blockcopolymere und statistisch aufgebaute EO/PO-Copolymere. Derartige Verbindungen werden z.B. in Kirk-Othmer (3) 1, 754 bis 789 beschrieben.

Bevorzugt werden als Polyhydroxyverbindungen genannt: auf Ethylenglykol, Diethylenglykol, Dipropylenglykol, Propylenglykol, 1,4-Butandiol, 1,6-Hexandiol, Glycerin, Trimethylolpropan, Pentaerythrit, Sorbit oder Saccharose gestartete Polypropylenglykole eines mittleren Molekulargewichts Mₙ von 200 bis 2.000 oder Mischpolymere aus Propylenoxid und Ethylenoxid gestartet auf Ethylenglykol, Propylenglykol, 1,4-Butandiol, Glycerin oder Trimethylolpropan, welche ein mittleres Molekulargewicht Mₙ von 200 bis 2.000 besitzen, sowie Mischungen der genannten Polyhydroxyverbindungen untereinander.

Zur Herstellung der kristallisierenden Polyetherpolyole (Zwischenprodukte) werden Katalysatoren eingesetzt, die Propylenoxid stereospezifisch zu polymerisieren vermögen. Dies sind die bekannten Aluminium- und/oder Zinkatome enthaltende Alkoxyverbindungen, die evtl. noch Aluminium- und/oder Zinkalkylgruppen enthalten, wie sie z.B. in Encycl. of Polym. Sci. and Engineering 6, 284-307 beschrieben sind.

Bevorzugt eingesetzt für die stereospezifische Polymerisation werden bimetallische Aluminium- und Zinkatome enthaltende µ-Oxoalkoxide, wie sie in US 3432445 beschrieben sind. Insbesondere werden solche bimetallischen Aluminium- und Zinkatome enthaltende µ-Oxoalkoxide als Katalysatoren eingesetzt (sogenannte Teyssie-Katalysatoren), die der nachstehenden, allgemeinen Formel entsprechen: 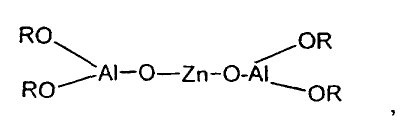 wobei
R für einen C₂-C₁₂-Alkylrest steht.

Als Alkylreste kommen beispielsweise in Frage: Der Ethyl-, Propyl-, Isopropyl-, Butyl-, Isobutyl-, Pentyl-, Hexyl-, Decyl-, Undecyl- sowie der Dodecylrest, bevorzugt der Propyl-, Isopropyl-, Butyl- und Isobutyl-Rest.

Vor dem Einsatz werden die oben beschriebenen Aluminium- und/oder Zinkatome enthaltenden Alkoxy-Verbindungen in der Regel mit dem Starterpolyol behandelt und modifiziert (wie in DE 19 748 359 beschrieben).

Für die anschließende nicht stereospezifische Umsetzung der Epoxide mit den als Zwischenprodukt erhaltenen kristallisierenden Polyetherpolyolen werden bevorzugt als Katalysatoren Alkalihydroxide, wie Kalium- und/oder Cäsiumhydroxid, Erdalkalihydroxide, wie Strontium- und/oder Bariumhydroxid und Doppelmetallcyanid (DMC)-Katalysatoren eingesetzt (siehe z.B. Kirk-Othmer (3), 18, Seite 616 bis 645).

Doppelmetallcyanid (DMC)-Katalysatoren, die für die Polyaddition der Epoxide an die als Zwischenprodukte erhaltenen kristallisierenden Polyetherpolyole geeignet sind, sind allgemein bekannt (siehe beispielsweise US 3 404 109, US 3 829 505, US 3 941 849 und US 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. DMC-Katalysatoren werden gewöhnlich erhalten, indem man eine wässrige Lösung eines Metallsalzes mit der wässrigen Lösung eines Metallcyanidsalzes in Gegenwart eines niedermolekularen organischen Komplexliganden. z.B. eines Ethers, umsetzt. In einer typischen Katalysatorpräparation werden beispielsweise wässrige Lösungen von Zinkchlorid (im Überschuss) und Kaliumhexacyanocobaltat gemischt und anschließend Dimethoxyethan (Glyme) zur gebildeten Suspension gegeben. Nach Filtration und Waschen des Katalysators mit wässriger Glyme-Lösung wird ein aktiver Katalysator der allgemeinen Formel

Zn₃[Co(CN)₆]₂ · x ZnCl₂ · yH₂O · z Glyme

erhalten (siehe EP 700 949).

Verbesserte DMC-Katalysatoren, wie sie z.B. in EP-A 700 949, EP-A 743 093, EP-A 761 708, WO 97/40086, WO 98/16310, DE-A 197 45 120, DE-A 197 57 574 und DE-A 198 102 269 beschrieben sind, besitzen zudem eine außerordentlich hohe Aktivität und ermöglichen die Herstellung von Polyetherpolyolen bei sehr geringer Katalysatorkonzentration, so dass eine Abtrennung des Katalysators aus dem Polyol nicht mehr erforderlich ist.

Als Epoxide zur Addition an das Zwischenprodukt werden bevorzugt Propylenoxid, Butylenoxid, Ethylenoxid oder auch Styroloxid eingesetzt, besonders bevorzugt wird Propylenoxid eingesetzt. Selbstverständlich sind auch Gemische der Epoxide untereinander einzusetzen.

Zur erwähnten Modifizierung der Aluminium- und/oder Zinkatome enthaltenen Alkoxy-Verbindungen werden diese mit dem Starterpolyol unter Substitution des Alkoxyrests oder auch des Alkylrests durch den Starterpolyolrest bei ca. 20 bis 200°C umgesetzt. Die Umsetzung der Katalysatoren geschieht in der Weise, dass ein Äquivalent Starterpolyol mit einer Menge an Katalysator umgesetzt wird. die in der Summe 10⁻³ bis 1 Mol Aluminium und/oder Zink enthält, bevorzugt 10⁻² bis 0.6 Mol. Der Einsatz der modifizierten Al-/Zn-Atome enthaltenden Alkoxy-Verbindungen ist bevorzugt. Die bei der Substitutionsreaktion entstehenden Alkohole und evtl. auch Alkane werden beispielsweise durch Erhitzen unter Vakuum entfernt.

Zu den so mit Starterpolyol. d.h. mit den obengenannten Polyhydroxyverbindungen. modifizierten und bevorzugt eingesetzten "Teyssie-Katalysatoren" der angegebenen Formel wird dann anschließend bei 50 bis 150°C, bevorzugt 80 bis 160°C unter einem Gesamtdruck von 0,5 bis 20 bar, bevorzugt 1 bis 5 bar, Propylenoxid gegeben und zwar in einer solchen Menge in Gramm (g), dass die Summe der Menge des Starterpolyols in g und der Menge Propylenoxid in g dividiert durch Mol an Starterpolyol gleich 600 bis 3000, bevorzugt 800 bis 2500 g pro Mol ist.

Nach Erhalt des bei ca. 20 bis 60°C, bevorzugt bei 20 bis 40°C, kristallisierenden Polyetherpolyols eines mittleren Molekulargewichts Mₙ von 500 bis 5000, bevorzugt 600 bis 3000 als Zwischenprodukt, wird dieses Produkt anschließend in einer bevorzugten Ausführungsform - wie erwähnt - mit einem Alkalihydroxid und/oder einem Erdalkalihydroxid als Base versetzt, wobei pro 100 g erhaltenem Polyetherpolyol 0,1 bis 2 g, bevorzugt 0,2 bis 1 g, Base zum Einsatz kommen. Wasser oder flüchtige organische Verbindungen, die bei der Zugabe anfallen, werden gegebenenfalls unter Erhitzen im Vakuum entfernt.

Das Zwischenprodukt kann vor der weiteren Addition von Epoxiden vom Katalysator befreit werden, z.B. durch Umsetzen mit Säuren und Abtrennen der entstehenden Metallsalze. Bevorzugt wird jedoch ein Verfahren, bei dem die Abtrennung des Katalysators aus dem Endprodukt erfolgt.

Die Addition des Epoxids an die als Zwischenprodukte erhaltenen kristallisierenden Polyetherpolyole kann bei Normaldruck oder bei Gesamtdrücken von 0,5 bis 20 bar, bevorzugt 1 bis 5 bar (absolut), und bei einer Temperatur von 80 bis 200°C, bevorzugt 90 bis 150°C, durchgeführt werden, wobei die Menge an Epoxid so bemessen ist, dass ein Hydroxypropylether eines mittleren Molekulargewichts Mₙ von 1000 bis 20.000, bevorzugt 1500 bis 10.000, entsteht, bestimmt über GPC (Polystyrol als Standard) oder über den Gehalt an Hydroxy-Endgruppen.

Erfindungsgemäß kann die Umsetzung der Epoxide mit dem als Zwischenprodukt erhaltenen, kristallinen Polyetherpolyol statt unter Alkali-Katalyse auch gemäß einer anderen bevorzugten Ausführungsform unter Katalyse mittels eines Doppelmetallcyanid-Katalysators erfolgen. Bevorzugt erfolgt auch hier keine zwischenzeitliche Abtrennung des die Aluminium- und/oder Zinkatome enthaltenden Katalysators.

Dabei wird die Doppelmetallcyanid-Katalysatorkonzentration so gewählt, dass unter den gegebenen Reaktionsbedingungen eine gute Beherrschbarkeit der Polyaddition der Epoxide möglich ist. Die Katalysatorkonzentration liegt im allgemeinen im Bereich von 0,0005 bis 1 Gew.-%, bevorzugt im Bereich von 0,001 bis 0,1 Gew.-%, bezogen auf die Menge des herzustellenden Polyetherpolyols. Die Polyaddition in Anwesenheit von Doppelmetallcyanid-Katalysatoren kann bei Gesamtdrücken von 0,5 bis 20 bar, bevorzugt 1 bis 5 bar, sowie bei Temperaturen von 50 bis 200°C, bevorzugt 70 bis 160°C, durchgeführt werden.

Eine Möglichkeit der Umsetzung des teilkristallinen Polyetherpolyols mit Propylenoxid besteht beispielsweise darin, das Gemisch aus dem Katalysator, dem teilkristallinen Polyetherpolyol und dem Propylenoxid, das auch noch Lösungsmittel enthalten kann, sukzessive in einen Reaktor so einzuspeisen. dass nach dem Anspringen der exothermen Reaktion eine schnelle Wärmeabführung z.B. über große Reaktorflächen gewährleistet ist. Zur Vervollständigung der Reaktion kann das Gemisch noch im Kreis gefahren werden.

Nach der Umsetzung mit dem Epoxid wird das erfindungsgemäß hergestellte Polyetherpolyol zur Entfernung bzw. Reduzierung des Metallgehalts mit wässriger Säure behandelt, wobei ein pH-Wert von ≤ 6 eingestellt wird. Dies gilt natürlich nur dann, wenn die Aluminium- und/oder Zinkatome enthaltenden Katalysatoren nicht schon direkt im Anschluss an die Herstellung des Zwischenprodukts entfernt wurden. Die entstehenden Metallsalze werden durch Extrahieren mit Wasser oder durch Ausfällen, eventuell unter Zugabe von geeigneten Lösungsmitteln, z. B. Toluol, aus dem Polyetherpolyol entfernt. Als Säuren kommen u. a. Salzsäure, Phosphorsäure. Schwefelsäure. Benzoesäure, Zitronensäure und/oder Milchsäure in Frage. Andere weniger bevorzugte Formen der Aufarbeitung ist z.B. die Behandlung mit Ionenaustauscher oder mit Adsorbentien.

Die Polyadditionsreaktion der Epoxide an das zwischenzeitlich erhaltene Polyetherpolyol kann in Substanz oder einem inerten, organischen Lösungsmittel, wie Toluol und/oder Tetrahydrofuran, durchgeführt werden. Die Menge an Lösungsmittel beträgt üblicherweise 10 bis 30 Gew.-%, bezogen auf die Menge des herzustellenden Polyetherpolyols.

Die nach dem erfindungsgemäßen Verfahren hergestellten kristallisierenden Polyetherpolyole eignen sich hervorragend für die Herstellung von Polyurethanwerkstoffen, wie z.B. PUR-Elastomeren, PUR-Schäumen und PUR-Beschichtungen. Die Herstellung der genannten PUR-Werkstoffe ist bekannt und wird beispielsweise im Kunststoff-Handbuch, Band 7, 3. Auflage, Carl Hanser Verlag, 1983, beschrieben.

Es ist als überraschend zu bewerten, dass es gelingt bei über 20°C kristallisierende Polyetherpolyole herzustellen, deren Kristallisation erhalten bleibt, obwohl die in der ersten Stufe erhaltenen kristallisierenden Polyetherpolyole zur Reduzierung der Viskosität (von mehr als 50 %) nachfolgend in einer nicht stereospezifischen Umsetzung mit Epoxiden weiter polymerisiert werden.

### Beispiele

### Beispiel 1

Zu 440 Teilen eines auf Trimethylolpropan gestarteten Hydroxypolyethers auf Basis von Propylenoxid der OH-Zahl 380 mg KOH/g werden 40 Teile einer 0,35 molaren Lösung von Di-µ-oxo[bis(1-methylethyloxy)-aluminium]zink gegeben und bei 130°C 3 Std. erhitzt. Die Reaktionsmischung wird auf 95°C abgekühlt und es wird eine Stunde lang Vakuum (0,3 mbar) angelegt. Es werden 100 Teile Toluol zugefügt und das Toluol anschließend bei 0,3 mbar wieder abdestilliert, bis eine Temperatur von 130°C erreicht ist.

Danach werden bei 110°C 400 Teile Propylenoxid zugetropft, so dass die Temperatur von 80°C nicht unterschritten wird.

Anschließend werden 0,1 Teile eines Doppelmetallcyanid Katalysators (hergestellt gemäß EP 743 093) zugefügt und danach bei 110°C 1160 Teile Propylenoxid zugetropft.

Wenn kein Rückfluss mehr festzustellen ist, wird das Produkt in Methylenchlorid aufgenommen und mit 10 % Schwefelsäure versetzt bis das Rohprodukt einen pH < 5 hat und anschließend mit Wasser gewaschen. Zur Neutralisation wird das Produkt mit einer wässrigen Bicarbonatlösung und Wasser gewaschen. Die organische Phase wird abgetrennt und vom Lösungsmittel befreit.

Das bei 25°C kristallisierende Produkt hat nach GPC (Polystyrol als Standard) ein Mₙ von 2190 und eine Viskosität von η = 260 m Pas (60°C).

### Vergleichsbeispiel:

Zu 440 Teilen eines auf Trimethylolpropan gestarteten Hydroxypolyethers auf Basis von Propylenoxid der OH-Zahl 380 mg KOH/g werden 40 Teile einer 0,35 molaren Lösung von Di-µ-oxo[bis(1-methylethyloxy)-aluminium]zink gegeben und bei 130°C 3 Std. erhitzt. Die Reaktionsmischung wir auf 95°C abgekühlt und es wird eine Stunde lang Vakuum (0,3 mbar) angelegt. Es werden 100 Teile Toluol zugefügt und das Toluol anschließend bei 0,3 mbar wieder abdestilliert, bis eine Temperatur von 130°C erreicht ist.

Danach werden bei 110°C 1560 Teile Propylenoxid zugetropft. Wenn kein Rückfluss mehr festzustellen ist, wird das Produkt in Methylenchlorid aufgenommen und mit 10 %iger Schwefelsäure versetzt, bis das Rohprodukt einen pH < 5 hat und anschließend mit Wasser gewaschen. Zur Neutralisation wird das Produkt mit einer wässrigen Bicarbonatlösung und Wasser gewaschen. Die organische Phase wird vom Lösungsmittel befreit.

Das bei 25°C kristallisierende Produkt hat nach GPC (Polystyrol als Standard) ein Mₙ von 2230 und eine Viskosität η = 16800 mPas (60°C).

### Beispiel 2

Zu 420 Teilen eines auf Propylenglykol gestarteten Hydroxypolyethers auf Basis von Propylenoxid der OH-Zahl 265 mg KOH/g werden 40 Teile einer 0,35 molaren Lösung von Di-µ-oxo[bis(1-methylethyloxy)-aluminium]zink gegeben und bei 130°C 3 Std. erhitzt. Die Reaktionsmischung wird auf 95°C abgekühlt und es wird eine Stunde lang Vakuum (0,3 mbar) angelegt. Es werden 100 Teile Toluol zugefügt und das Toluol anschließend bei 0.3 mbar wieder abdestilliert, bis eine Temperatur von 130°C erreicht ist.

Danach werden bei 110°C 750 Teile Propylenoxid zugetropft, so dass die Temperatur von 80°C nicht unterschritten wird, 0,05 Teile eines Doppelmetallcyanid-Katalysators werden zugefügt und danach bei 110°C 850 Teile Propylenoxid zugetropft.

Wenn kein Rückfluss mehr festzustellen ist, wird das Produkt in Toluol aufgenommen und mit 10 %iger Schwefelsäure versetzt, bis das Rohprodukt einen pH < 5 hat, und anschließend mit Wasser gewaschen.

Zur Neutralisation wird das Produkt mit einer wässrigen Bicarbonatlösung und Wasser gewaschen. Die organische Phase wird abgetrennt und vom Lösungsmittel befreit.

Das bei 25°C kristallisierende Produkt hat nach GPC (Polystyrol als Standard) ein Mₙ = 2150 und eine Viskosität η = 510 Pas (60°C).

### Beispiel 3

Zu 400 Teilen eines auf Glycerin gestarteten Hydroxypolyethers auf Basis von Propylenoxid der OH-Zahl 250 mg KOH/g werden 40 Teile einer 0,35 molaren Lösung von Di-µ-oxo[bis(1-methylethyloxy)-aluminium]zink gegeben und bei 130°C 3 Std. erhitzt. Die Reaktionsmischung wird auf 95°C abgekühlt und es wird eine Stunde lang Vakuum (0,3 mbar) angelegt.

Es werden 100 Teile Toluol zugefügt und das Toluol anschließend bei 0,3 mbar wieder abdestilliert, bis eine Temperatur von 130°C erreicht ist.

Danach werden bei 110°C 400 Teile Propylenoxid zugetropft so dass die Temperatur von 80°C nicht unterschritten wird. 0,02 Teile eines Doppelmetallcyanid-Katalysators werden zugefügt und danach bei 110°C 1000 Teile Propylenoxid zugetropft.

Wenn kein Rückfluss mehr festzustellen ist, wird das Produkt in Toluol aufgenommen und mit 10 %iger Salzsäure versetzt, bis das Rohprodukt einen pH < 5 hat und anschließend mit Wasser gewaschen.

Zur Neutralisation wird das Produkt mit einer wässrigen Bicarbontlösung und Wasser gewaschen. Die organische Phase wird abgetrennt und vom Lösungsmittel befreit.

Das bei 25°C kristallisierende Produkt hat nach GPC (Polystyrol als Standard) ein Mₙ = 3406 und eine Viskosität η = 670 mPas (60°C).

## Patentansprüche

1. Kristallisierende Polyetherpolyole herstellbar durch Umsetzung von zunächst Propylenoxid und Polyhydroxyverbindungen in Gegenwart von einer Zinkund/oder Aluminiumatome enthaltenden Alkoxy-Verbindung zu einem kristallisierenden Polyetherpolyol eines mittleren Molekulargewichts Mₙ von 500 bis 5000 und anschließender weiterer Umsetzung des so erhaltenen kristallisierenden Polyetherpolyols mit 10 bis 90 Gew.-%, bezogen die Menge des kristallisierenden Polyols, eines Epoxids in Gegenwart eines Katalysators, der Propylenoxid nicht stereospezifisch polymerisiert, zu einem kristallisierenden Polyetherpolyol eines mittleren Molekulargewichts Mₙ von 1000 bis 20 000.

2. Verfahren zur Herstellung von kristallisierenden Polyetherpolyolen, **dadurch gekennzeichnet, dass** man zunächst Propylenoxid mit Polyhydroxyverbindungen in Gegenwart von einer Zink- und/oder Aluminiumatome enthaltenden Alkoxyverbindung zu einem kristallisierenden Polyetherpolyol eines mittleren Molekulargewichts Mₙ von 500 bis 5000 umsetzt und anschließend das so erhaltene kristallisierende Polyetherpolyol mit 10 bis 90 Gew.-%, bezogen auf die Menge des kristallisierenden Polyetherpolyols, eines Epoxids in Gegenwart eines Katalysators, der Propylenoxid nicht stereospezifisch polymerisiert, zu einem kristallisierenden Polyetherpolyol eines mittleren Molekulargewichts Mₙ von 1000 bis 20 000 weiter reagieren lässt.

3. Verwendung der kristallisierenden Polyetherpolyole nach Anspruch 1 zur Herstellung von Polyurethan-Werkstoffen, insbesondere Polyurethan-Schäumen, -Elastomeren und -Beschichtungen.

## Claims

1. Crystallising polyether polyols which can be produced firstly by the reaction of propylene oxide and polyhydroxy compounds in the presence of an alkoxy compound which contains zinc and/or aluminium atoms to form a crystallising polyether polyol with an average molecular weight Mₙ from 500 to 5000, followed by the further reaction of the crystallising polyether polyol which is thus obtained with 10 to 90 % by weight, with respect to the amount of crystallising polyol, of an epoxide in the presence of a catalyst which does not polymerise propylene oxide stereospecifically, to form a crystallising polyether polyol with an average molecular weight Mₙ from 1000 to 20,000.

2. A method of producing crystallising polyether polyols, **characterised in that** propylene oxide is first caused to react with polyhydroxy compounds in the presence of an alkoxy compound which contains zinc and/or aluminium atoms to form a crystallising polyether polyol with an average molecular weight Mₙ from 500 to 5000, and the crystallising polyether polyol which is thus obtained is subsequently caused to react further with 10 to 90 % by weight, with respect to the amount of crystallising polyol, of an epoxide in the presence of a catalyst which does not polymerise propylene oxide stereospecifically. to form a crystallising polyether polyol with an average molecular weight Mₙ from 1000 to 20,000.

3. The use of the crystallising polyether polyols according to claim 1 for the production of polyurethane materials, particularly polyurethane foams, polyurethane elastomers and polyurethane coatings.

## Revendications

1. Polyéther-polyols cristallisables qu'on prépare en faisant réagir d'abord l'oxyde de propylène et des composés polyhydroxylés en présence d'un dérivé alcoxylé contenant des atomes de zinc et/ou d'aluminium, la réaction donnant un polyéther-polyol cristallisable au poids moléculaire moyen Mₙ de 500 à 5 000 qu'on soumet ensuite à réaction complémentaire avec 10 à 90 % de son poids d'un époxyde en présence d'un catalyseur qui ne provoque pas de polymérisation stéréospécifique de l'oxyde de propylène, cette réaction donnant un polyéther-polyol cristallisable au poids moléculaire moyen Mₙ de 1 000 à 20 000.

2. Procédé pour la préparation de polyéther-polyols cristallisables, **caractérisé en ce qu'**on fait réagir d'abord l'oxyde de propylène avec des composés polyhydroxylés en présence d'un dérivé alcoxylé contenant des atomes de zinc et/ou d'aluminium, ce qui donne un polyéther cristallisable au poids moléculaire moyen Mₙ de 500 à 5 000 qu'on fait ensuite réagir avec 10 à 90 % de son poids d'un époxyde en présence d'un catalyseur qui ne provoque pas de polymérisation stéréospécifique de l'oxyde de propylène, cette réaction donnant un polyéther-polyol cristallisable au poids moléculaire moyen Mₙ de 1 000 à 20 000.

3. Utilisation des polyéther-polyols cristallisables selon la revendication 1 pour la préparation de matériaux de polyuréthannes, en particulier de mousses, d'élastomères et de revêtements de polyuréthannes.
